# EUROPÄISCHE PATENTSCHRIFT

(11) **EP 3 482 981 B1**
(45) Veröffentlichungstag und Bekanntmachung des Hinweises auf die Patenterteilung: **12.08.2020**
(21) Anmeldenummer: 18199886.5
(22) Anmeldetag: 11.10.2018
(51) Int. Cl.: B60J 5/06

(54) **PLANENAUFBAU UND PLANENEINHEIT FÜR EIN NUTZFAHRZEUG**
CANVAS COVER AND CANVAS UNIT FOR A COMMERCIAL VEHICLE
STRUCTURE DE BÂCHE ET UNITÉ DE BÂCHE POUR UN VÉHICULE UTILITAIRE

(30) Priorität: 08.11.2017 DE 102017126055
(43) Veröffentlichungstag der Anmeldung: 15.05.2019
(73) Patentinhaber: Schmitz Cargobull AG, 48341 Altenberge (DE)
(72) Erfinder: Derks, Roger Geradus Christiaan, 5922 XT Venlo (NL)
(74) Vertreter: Cohausz & Florack

(56) Entgegenhaltungen:
- EP-A1- 2 116 671
- EP-A1- 2 949 492
- EP-A1- 3 015 311
- EP-A2- 2 851 225
- GB-A- 1 542 812

## Beschreibung

Die Erfindung betrifft eine Planeneinheit, insbesondere Seitenplaneeinheit, für einen Planenaufbau eines Nutzfahrzeugs, mit einem Planenelement, einer Kedereinheit und wenigstens einem Gurt, wobei wenigstens ein Endbereich wenigstens eines Gurts um wenigstens einen Gurtabschnitt der Kedereinheit umgeschlagen ist. Ferner betrifft die Erfindung einen Planenaufbau eines Nutzfahrzeugs, insbesondere eines Lastkraftwagens, Anhängers oder Sattelaufliegers, mit wenigstens einer solchen Planeneinheit.

Nutzfahrzeuge der genannten Art, zum Beispiel offenbart in Dokument EP 2851 225, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet.

Neben Kofferaufbauten sind zudem sogenannte Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeeinheit entlang der Seitenwand verschoben werden kann, spricht man auch von sogenannten Curtainsidern.

Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden. Die Planeneinheit bzw. Seitenplaneneinheit ist zum Zwecke des Aufschiebens mit Planenrollern verbunden, die in der Holmstruktur gehalten sind und über Planenlaufflächen entlang der Holmstruktur verschoben werden können. Zum Verschließen des Planenaufbaus durch die Planeneinheit, insbesondere einer Seitenwand des Planenaufbaus durch eine Seitenplaneneinheit, wird die Planeneinheit an ihren Längsenden formschlüssig mit den zugehörigen Eckrungen verbunden. Hierzu können entweder sogenannte Hakprofile oder Planenspannrohre genutzt werden. Während die Planeneinheit in einem Hakfprofil lediglich formschlüssig aufgenommen und an der entsprechenden Eckrunge gehalten werden kann, erlaubt die Verwendung eines Planenspannrohrs zusätzlich das Aufwickeln überschüssigen Planenmaterials und damit das Strammziehen der Plane entlang der zu verschließenden Öffnung des Planenaufbaus. Das Planenspannrohr kann zu diesem Zweck mit dem Planenelement in eine Aufnahme in der Eckrunge eingehängt und dort um ihre Längsachse gedreht werden. Das Planelement wird dabei um das Planenspannrohr gewickelt und die Planeneinheit stramm gezogen.

Zum Verbinden mit dem Hakprofil oder dem Planenspannrohr weist die Planeneinheit eine Kedereinheit auf, die in das Hakprofil oder das Planenspannrohr eingezogen werden kann. Zudem weist typischerweise ein Planenelement der Planeneinheit an den Längsenden Umschlagbereiche auf, an denen das Planenelement um die Kedereinheit umgeschlagen ist. Die Kedereinheit und das umgeschlagene Planenelement verhindern, das unbeabsichtigte Herausziehen des Planenelements in Längsrichtung desselben aus dem Hakprofil oder dem Planenspannrohr. Neben dem Planenelement kann zudem ein Gurt um einen Gurtabschnitt der Kedereinheit umgeschlagen sein, der der Aussteifung der Planeneinheit und/oder der Ladungssicherung dienen kann. Hierzu ragt der Gurt in den Laderaum des Planenaufbaus hinein. Durch das Umschlagen des Gurts um die Kedereinheit kann der Gurt hohe Zugkräfte an die entsprechende Eckrunge ableiten, ohne dabei das Planenelement zu beschädigen.

Eine entsprechende Planeneinheit und ein entsprechender Planenaufbau sind bereits aus der DE 10 2013 110 517 A1 bekannt. Bei diesen Planeneinheiten ist vorgesehen, dass die Planenelmente im Bereich eines Gurtabschnitts entsprechende Aussparungen aufweisen, um dort anstelle des Planenelements den Gurt in einem Hakprofil aufnehmen zu können. Die Langlebigkeit dieser Planeneinheiten werden im robusten Praxiseinsatz jedoch als nicht zufriedenstellend erachtet.

Daher liegt der vorliegenden Erfindung die Aufgabe zugrunde, Planeneinheiten und Planenaufbauten jeweils der eingangs genannten und zuvor näher beschriebenen Art derart auszugestalten und weiterzubilden, dass Planeneinheiten und Planenaufbauten auch bei hoher Beanspruchung langlebiger sind.

Diese Aufgabe ist bei einer Planeneinheit nach dem Oberbegriff des Anspruchs 1 dadurch gelöst, dass die Kedereinheit in dem wenigstens einen Gurtabschnitt einen geringeren Umfang aufweist als an wenigstens einem Abschnitt außerhalb des Gurtabschnitts.

Die genannte Aufgabe ist bei einem Planenaufbau nach dem Oberbegriff von Anspruch 12 dadurch gelöst, dass die wenigstens eine Planeneinheit nach einem der Ansprüche 1 bis 11 ausgebildet ist.

Durch den geringeren Umfang der Kedereinheit in wenigstens einem Gurtabschnitt gegenüber anderen Abschnitten der Kedereinheit, wird im Gurtabschnitt eine Aufnahme geschaffen, die einen Aufnahmeraum bildet, in dem der Gurt aufgenommen wird und um den Gurtabschnitt umgeschlagen und so mit der Kedereinheit verbunden werden kann. Es wird also die Kedereinheit zur Aufnahme des Gurts an der Stelle geschwächt, an der der Gurt an den Keder angebunden werden soll, nämlich im Gurtabschnitt. Dies erscheint kontraproduktiv zu sein, da die Kedereinheit durch den verringerten Umfang im Gurtabschnitt weniger steif ist und die Kedereinheit mithin beim Übertragen von Zugkräften in Richtung des Gurts gebogen werden kann. Da die Kedereinheit im Gurtabschnitt gleichzeitig dünner ausgebildet ist, steigt prinzipiell die Gefahr, dass das Planenelement mitsamt der Kedereinheit und dem Gurt im Bereich des Gurtabschnitts aus dem Hakprofil oder dem Planenspannrohr herausgezogen wird. Alternativ oder zusätzlich steigt durch den geringeren Umfang der Kedereinheit in dem Bereich, in dem der Gurt am Keder festgelegt ist, prinzipiell das Risiko eines Materialversagens, insbesondere eines Bruchs, der Kedereinheit.

Folglich scheint die erfindungsgenäße Ausgestaltung der Planeneinheit gerade nicht dazu geeignet zu sein, eine langlebigere Planeneinheit zu erhalten. Dies ist aber trotzdem der Fall. So wird nämlich durch den an den Gurtabschnitt angrenzenden Bereich der Kedereinheit dafür Sorge getragen, dass die Kedereinheit sicher im Hakprofil oder im Planenspannrohr gehalten bleibt.

Ob die Planeneinheit mit nur einem Gurt oder mehreren Gurten versehen wird, hängt von der gewünschten Funktion der Planeneinheit ab. Wenn zur Aussteifung und/oder zur Ladungssicherung Gurte auf unterschiedlichen Höhen der Planeneinheit gewünscht sind, können zwei oder mehr Gurte entlang der Kedereinheit vorgesehen sein, wobei dann zwischen den entsprechenden Gurtabschnitten vorzugsweise Abschnitte der Kedereinheit mit größeren Durchmessern als in den Gurtabschnitten angeordnet sind. So wird die Kedereinheit trotz der Mehrzahl von Gurten sicher im Hakprofil oder in Planenspannrohr gehalten. Des Weiteren kann es sich insbesondere zur Aussteifung der Planeneinheit anbieten, wenn die Gurte mit ihren gegenüberliegenden Enden jeweils an einer von zwei an gegenüberliegenden Seiten des Planenelements vorgesehenen Kedereinheiten festgelegt sind. Die Gurte erstrecken sich dann wenigstens im Wesentlichen entlang des gesamten Planenelements, um dieses somit auf der gesamten Länge aussteifen zu können.

Der besseren Verständlichkeit halber und zur Vermeidung unnötiger Wiederholungen werden nachfolgend die Planeneinheit und der Planenaufbau gemeinsam beschrieben, ohne jeweils im Einzelnen zwischen der Planeneinheit und dem Planenaufbau zu unterscheiden. Für den Fachmann ergibt sich jedoch anhand des Kontextes, welches Merkmal jeweils für die Planeneinheit und den Planenaufbau besonders bevorzugt ist.

Bei einer ersten besonders bevorzugten Ausgestaltung der Planeneinheit ist das Planenelement an wenigstens einem Rand um die Kedereinheit umgeschlagen. Auf diese Weise wird eine zuverlässige Verbindung zwischen dem Planenelement und der Kedereinheit erhalten. Dies sorgt zudem dafür, dass die Planeneinheit sicher an einer Eckrunge des Planenaufbaus gehalten werden kann. Ferner ist es zweckmäßig, das Planenelement um den wenigstens einen Gurtabschnitt der Kedereinheit und um den um den wenigstens einen Gurtabschnitt umgeschlagenen Gurt umzuschlagen. Das wenigstens abschnittsweise um die Kedereinheit um den Gurt und die vom Gurt umgebene Kedereinheit umgeschlagene Planenelement schützt den um die Kedereinheit umgeschlagenen Gurt, was der Langlebigkeit der Planeneinheit insgesamt zugutekommt. Dabei ist das Planenelement vorzugsweise durchgängig, also wenigstens im Wesentlichen entlang des gesamten Rands des Planenelements und/oder entlang der gesamten Kedereinheit, um die Kedereinheit umgeschlagen. Das Planenelement ohne Unterbrechungen oder Aussparungen im Umschlagbereich ist wasserdicht und widerstandsfähiger gegenüber Beschädigungen, was ebenfalls der Langlebigkeit der Planeneinheit insgesamt zugutekommt. Hinzu kommt, dass die Fertigung der Planeneinheit sehr einfach und schnell erfolgen kann, da eine zusätzliche Bearbeitung des Planenelements unterbleiben kann. Alternativ zu einem Umschlagen des Planenelements um die Kedereinheit kann die Kedereinheit mit dem Rand des Planenelements verbunden sein. Beispielsweise kann der Rand mit der Kedereinheit verschweißt und/oder vernäht sein, ohne dass das Planenelement um die Kedereinheit umgeschlagen ist. Der Rand des Planelements kann auch die Kedereinheit eingestellt und dort form-, kraft- und/oder stoffschlüssig festgelegt sein. Bedarfsweise kann der Rand des Planenelement hierzu einen in der Kedereinheit aufgenommenen Keder aufweisen.

Des Weiteren kann der um die Kedereinheit umgeschlagene oder mit der Kedereinheit verbundene Rand des Planenelements an wenigstens einem Längsende der Planeneinheit vorgesehen sein. Dies erlaubt es beispielsweise, die Planeneinheit als Seitenplaneneinheit eines Planenaufbaus in Form eines Curtainsiders zu nutzen. Außerdem kann die Planeneinheit dann an einem oberen Rand mit einem Holm, insbesondere Längsholm, des Planenaufbaus verbunden werden. Um die Planeneinheit einfach und zuverlässig an dem Planenaufbau festzulegen, bietet es sich an, wenn das Planenelement an den Längsenden der Planeneinheit vorgesehenen Rändern um jeweils eine Kedereinheit umgeschlagen oder mit der Kedereinheit verbunden ist. Dann kann die Planeneinheit an beiden Längsenden jeweils mit einem Hakprofil oder einem Planenspannrohr verbunden werden. Auf diese Weise lässt sich die Planeneinheit leicht mit den angrenzenden Eckrungen verbinden.

Der wenigstens eine Gurt der Planeneinheit kann wenigstens abschnittsweise fest mit dem Planenelement verbunden werden, um einerseits auch im geöffneten Zustand der Planeneinheit sicher an dem Planenelement gehalten zu werden und andererseits in dem wenigstens einen Verbindungsbereich mit dem Planenelement Zugkräfte von dem Planenelement aufnehmen zu können. Dabei ist es fertigungstechnisch einfach, den Gurt und das Planenelement wenigstens abschnittsweise zu verkleben, zu verschweißen und/oder zu vernähen. Je nachdem wie der wenigstens eine Gurt ausgebildet und angeordnet ist, kann der wenigstens eine Gurt zur Aussteifung des Planenelements in wenigstens einer Richtung dienen. Erstreckt sich der Gurt beispielsweise in der Längsrichtung des Planenelements und ist der Gurt zudem über die Länge des Planenelements an mehreren Stellen mit dem Planenelement verbunden, kann der Gurt Zugkräfte in Längsrichtung des Planenelements aufnehmen und so einem Ausbeulen des Planenelements nach außen entgegenwirken. Ein solches Ausbeulen der Plane nach außen kann ansonsten auftreten, wenn die Ladung im Laderaum nach außen gegen das Planenelement drückt.

Um eine hohe Steifigkeit und Festigkeit der Kedereinheit bereitzustellen sowie die Kedereinheit einfach fertigen und montieren zu können, kann die Kedereinheit einen wenigstens im Wesentlichen kreisförmigen Querschnitt aufweisen. Dies gilt wahlweise im Gurtabschnitt und/oder in angrenzenden Abschnitten der Kedereinheit. In diesem Zusammenhang ist es dann besonders bevorzugt, wenn der Durchmesser der Kedereinheit im Gurtabschnitt der Kedereinheit geringer ist als der Durchmesser der Kedereinheit in einem Abschnitt außerhalb des Gurtabschnitts. So wird in der Aufnahme der Kedereinheit Platz für den Gurt geschaffen, der so im Gurtabschnitt um die Kedereinheit umgeschlagen werden kann, ohne den Umschlagbereich des Planenelements an dieser Stelle aufzuweiten. Die Kedereinheit kann so mit dem umgeschlagenen Planelement und dem ungeschlagenen Gurt in ein Hakprofil und/oder ein Planenspannrohr eingezogen werden, wie auch die Planeneinheit mit einer Kedereinheit ohne die Aufnahme und ohne den darin angeordneten Gurt in das Hakprofil und/oder das Planenspannrohr eingezogen werden würde.

Ein guter Kompromiss hinsichtlich der Steifigkeit und Festigkeit der Kedereinheit einerseits und eines stabilen Gurts, der hohe Zugkräfte an die Eckrunge übertragen kann, andererseits bietet es sich an, wenn der Umfang und/oder der Durchmesser der Kedereinheit im Gurtabschnitt der Kedereinheit weniger als 90%, vorzugsweise weniger als 80%, insbesondere weniger als 70%, als der Umfang und/oder der Durchmesser der Kedereinheit in einem Abschnitt außerhalb des Gurtabschnitts beträgt. Gleichzeitig sollte der Durchmesser oder Umfang der Kedereinheit im Gurtabschnitt nicht zu gering sein. So bietet es sich ebenso an, wenn der Umfang und/oder der Durchmesser der Kedereinheit im Gurtabschnitt der Kedereinheit wenigstens 40%, vorzugsweise wenigstens 50%, insbesondere wenigstens 60% des Umfangs und/oder des Durchmessers der Kedereinheit in einem Abschnitt außerhalb des Gurtabschnitts beträgt.

Alternativ oder zusätzlich kann der Umfang des wenigstens einen, um einen Gurtabschnitt der Kedereinheit umgeschlagenen Gurts kleiner oder gleich dem Umfang der Kedereinheit in einem Abschnitt außerhalb des Gurtabschnitts sein. In diesem Falle steht der Gurt, der im Gurtabschnitt der Kedereinheit um die Kedereinheit umgeschlagen ist, nicht gegenüber der Kedereinheit in wenigstens einem anderen Abschnitt nach außen vor. Ausgenommen ist hier jedoch bedarfsweise der Bereich, in dem der Gurt von der Kedereinheit weg nach außen geführt ist, etwa um aus dem Hakprofil und/oder dem Planenspannrohr herausgeführt zu werden. Diese Anordnung des Gurts hat zur Folge, dass der Gurt geschützt in der Aufnahme der Kedereinheit aufgenommen ist. Insbesondere wird die Reibung zwischen dem Planenelement und dem Gurt verringert. Alternativ oder zusätzlich zu dem zuvor beschriebenen Umfangsverhältnis kann aus demselben Grund der Gesamtdurchmesser von der Kedereinheit im Gurtabschnitt und den um den Gurtabschnitt umgeschlagenen Gurt kleiner oder gleich dem Durchmesser der Kedereinheit in einem Abschnitt außerhalb des Gurtabschnitts gewählt sein.

Die Handhabung, die Fertigung und die Stabilität der Kedereinheit kann bedarfsweise gesteigert werden, indem die Kedereinheit wenigstens zweiteilig ausgebildet wird und mithin wenigstens zwei separate Kederabschnitte umfasst. Einer der Kederabschnitte kann dann den wenigstens einen Gurtabschnitt und wenigstens einen Verstärkungsabschnitt zu wenigstens einer Seite des Gurtabschnitts aufweisen. Durch die Mehrteiligkeit der Kedereinheit können die unterschiedlichen Kederabschnitte aus unterschiedlichen Materialien gefertigt werden. Während ein Kederabschnitt ohne Gurtabschnitt aus einem verhältnismäßig günstigen und weniger festen Material gebildet sein kann, kann ein Kederabschnitt mit einem Gurtabschnitt wegen der dort höheren Beanspruchung aus einem teureren und festeren Material gebildet werden. Um den Gurtabschnitt bzw. den den Gurtabschnitt aufweisenden Kederabschnitt zu verstärken, kann der wenigstens eine Verstärkungsabschnitt des Kederabschnitts einen größeren Umfang und/oder Durchmesser aufweisen als derselbe Kederabschnitt am Gurtabsachnitt.

Unabhängig davon, ob die Kedereinheit einteilig oder mehrteilig ausgebildet ist, ist aus Festigkeits- und Stabilitätsgründen bevorzugt, wenn der Umfang und/oder Durchmesser der Kedereinheit in einem unmittelbar an den Gurtabschnitt angrenzenden Abschnitt der Kedereinheit größer ist als im Gurtabschnitt. Dies gilt insbesondere, wenn der Umfang und/oder Durchmesser der Kedereinheit in zwei zu beiden Seiten unmittelbar an den Gurtabschnitt angrenzenden Abschnitten der Kedereinheit größer ist als im Gurtabschnitt. So kann beispielsweise die Kedereinheit gezielt nur dort geschwächt werden, wo es für die Aufnahme des Gurts in der Aufnahme der Kedereinheit unentbehrlich ist. Daraus leitet sich weiter ab, dass der Gurtabschnitt bevorzugt wenigstens im Wesentlichen so breit ausgebildet ist wie der Gurt selbst. Gleichwohl kann ein gegenüber dem Gurt geringfügig breiterer Gurtabschnitt einer zuverlässigen und reibungsarmen Aufnahme des Gurts dienlich sein.

Zudem ist es bevorzugt, wenn der Umfang und/oder der Durchmesser des wenigstens einen Kederabschnitts am Gurtabschnitt weniger als 90%, vorzugsweise weniger als 80%, insbesondere weniger als 70%, als der Umfang und/oder der Durchmesser des wenigstens einen Kederabschnitts im Verstärkungsabschnitt beträgt. Alternativ oder zusätzlich beträgt der Umfang und/oder der Durchmesser des wenigstens einen Kederabschnitts am Gurtabschnitt wenigstens 40%, vorzugsweise wenigstens 50%, insbesondere wenigstens 60% des Umfangs und/oder des Durchmessers des wenigstens einen Kederabschnitts im Verstärkungsabschnitt. So kann ein guter Kompromiss hinsichtlich der Steifigkeit und Festigkeit des Kederabschnitts im Gurtabschnitt und der Verwendung eines stabilen Gurts zur Aufnahme hoher Zugkräfte erreicht werden.

Um ein langlebiges Planenelement bereitzustellen, kann dieses wenigstens im Wesentlichen aus einem kunststoffbeschichtetem Gewebe, insbesondere PVCbeschichtetem Gewebe, gebildet sein, wobei das Gewebe seinerseits aus Kunststofffasern, etwa Polyesterfasern oder Aramidfasern gebildet sein kann. Das Planenelement kann so auch besonders effektiv den Gurt vor Beschädigungen durch äußere mechanische Einflüsse schützen. Der Gurt selbst kann sehr widerstandsfähig ausgebildet werden, wenn er wenigstens im Wesentlichen aus Kunststofffasern, insbesondere aus Polyesterfasern oder Aramidfasern, gefertigt wird. Für die Kedereinheit und/oder wenigstens einen Kedereabschnitt bietet es sich als Kompromiss zwischen Festigkeit und Kosten an, die Kedereinheit und/oder wenigstens einen Kederabschnitt wenigstens im Wesentlichen aus Kunststoff, vorzugsweise Polyvinylchlorid (PVC), herzustellen. Insbesondere kann aus diesem Grunde der wenigstens eine einen Gurtabschnitt umfassende Kederabschnitt wenigstens im Wesentlichen aus Metall, insbesondere aus einem mit einer korrosionsbeständigen Beschichtung versehenen Metall oder Edelstahl, gefertigt sein.

Um die Planeneinheit einfach öffnen und/oder als Planeneinheit für einen Planenaufbau in Form eines Curtainsiders verwenden zu können, bietet es sich an, wenn an einem Rand des Planenelements einer Mehrzahl von Planenlaufrollern zum Verbinden mit einem Längsholm eines Planenaufbaus vorgesehen sind. Die Planenlaufroller können dabei bevorzugt wenigstens im Wesentlichen gleichförmig entlang des Rands verteilt angeordnet sein.

Bei einer ersten besonders bevorzugten Ausgestaltung des Planenaufbaus ist vorgesehen, dass dieser als Curtainsider ausgebildet ist. Die Planeneinheit ist dann in Längsrichtung des Nutzfahrzeugs verschiebbar vorgesehen, was das Öffnen und das Schließen des Planenaufbaus vereinfacht.

Insbesondere in diesem Zusammenhang ist es zudem zweckmäßig, wenn ein Rand des Planenelements mit einer Mehrzahl von Planenlaufrollern mit einem Längsholm eines Planenaufbaus verbunden ist. Das Planenelement wird dann von den Planenlaufrollern am Längsholm gehalten, die mit entsprechenden Rollen in Längsrichtung am Längsholm verfahren werden können.

Zum sicheren Verschließen des Planenlaufbaus kann die Planeneinheit mit der wenigstens einen Kedereinheit an wenigstens einem Längsende der Planeneinheit formschlüssig in einem Hakprofil und/oder einem Planenspannrohr aufgenommen sein. Dabei kann das Planenspannrohr zum Schließen des Planenaufbaus in eine Aufnahme der Eckrunge eingehängt und dort gedreht werden, um das Planenelement zu spannen.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem erfindungsgemäßen Planenaufbau in einer perspektivischen Ansicht,
- Fig. 2A-B: ein Detail der erfindungsgemäßen Planeneinheit des Planenaufbaus aus Fig. 1 in einer Schnittansicht entlang der Schnittebene IIA-IIA aus Fig. 1 sowie in einer perspektivischen Ansicht,
- Fig. 3: die Verbindung des Gurts und eines Kederabschnitts der Planeneinheit aus Fig. 3 in einer perspektivischen Ansicht,
- Fig. 4: ein weiteres Detail der Planeneinheit aus Fig. 1 in einer Schnittansicht entlang der Schnittebene IV-IV aus Fig. 1 und
- Fig. 5A-B: das Detail einer zweiten erfindungsgemäßen Planeneinheit in einer perspektivischen Ansicht gemäß Fig. 2.

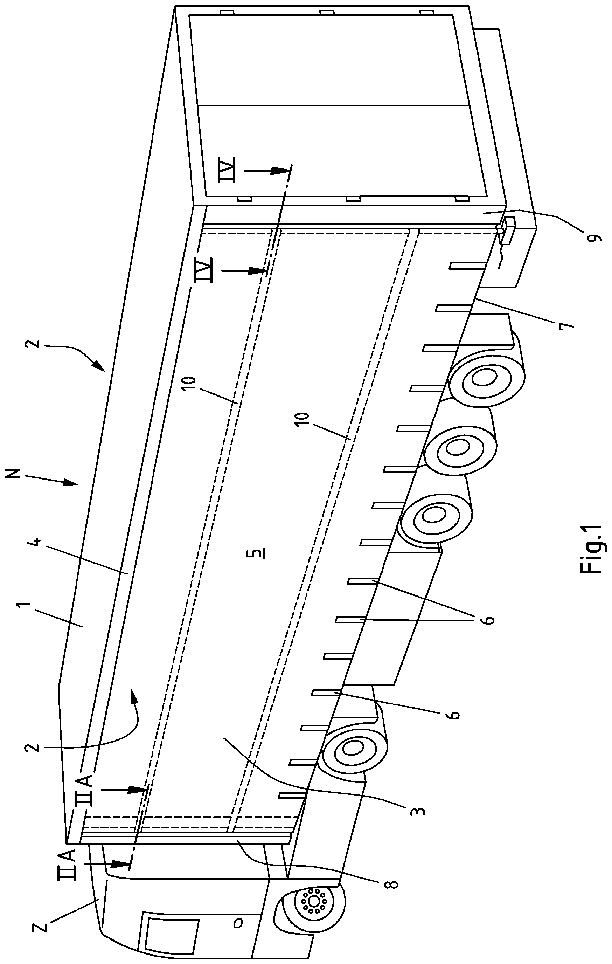

In der Fig. 1 ist ein Nutzfahrzeug N in Form eines Sattelaufliegers dargestellt, das von einer Zugmaschine Z gezogen wird. Das Nutzfahrzeug N trägt einen Planenaufbau 1 in Form eines Curtainsiders, bei dem an den beiden Seitenwänden 2 jeweils eine Planeneinheit 3 vorgesehen ist, die sich öffnen und im geöffneten Zustand entlang des zugehörigen Längsholms 4 nach vorne und/oder hinten verschieben lässt. Die Planeneinheit 3 weist ein flächiges Planenelement 5 auf, das die Seitenwand 2 des Planenaufbaus 1 im geschlossenen Zustand verschließt. Das Planenelement 5 ist an ihrem oberen Ende mit einer Reihe nicht dargestellter und in etwa regelmäßigen Abständen entlang des Planenelements 5 verteilten Planenlaufrollern verbunden, die wiederum im zugehörigen Längsholm 4 des Planenaufbaus 1 längsverschiebbar gehalten sind. Am unteren Rand des Planenelements 5 sind Spannelemente 6 vorgesehen, um das Planenelement 5 mit dem Boden 7 des Planenaufbaus 1 verbinden und das Planenelement 5 in vertikaler Richtung spannen zu können. An den beiden Längsenden ist die Planeneinheit 3 formschlüssig und lösbar mit den zugehörigen Eckrungen 8,9 des Planeneaufbaus 1 verbunden, um die entsprechende Seitenwand 2 des Planenaufbaus 1 zum Be- und Entladen weit öffnen zu können.

Um das Planeelement 5 auszusteifen, sind bei der dargestellten und insoweit bevorzugten Planeneinheit 3 zwei Gurte 10 an der Innenseite des Planenelements 5 vorgesehen. Die Gurte 10 verstärken bzw. versteifen die Planeneinheit 3, so dass das Planenelement 5 von der Ladung im Laderaum des Planenaufbaus 1 nicht so weit nach außen gedrückt werden kann, wenn sich die Ladung von innen gegen die Planeneinheit 3 und/oder die Gurte 10 abstützt. Alternativ oder zusätzlich können die Gurte 10 aber auch zur Ladungssicherung genutzt werden. So können beispielsweise Spanngurte oder dergleichen in nicht direkt mit dem Planenelement 5 verbundenen Bereichen oder Ösen der Gurte 10 eingehängt werden, um Ladung im Laderaum zu sichern. Die hierfür zur Verfügung stehenden Bereiche und/oder Ösen können vorzugsweise über die Längserstreckung der Gurte 10 verteilt angeordnet sein. Bei dem dargestellten und insoweit bevorzugten Planenaufbau 1 erstrecken sich die Gurte 10 wenigstens im Wesentlichen über die Längserstreckung des Planenelements 5, von einer Eckrunge 8,9 zur gegenüberliegenden Eckrunge 9,8.

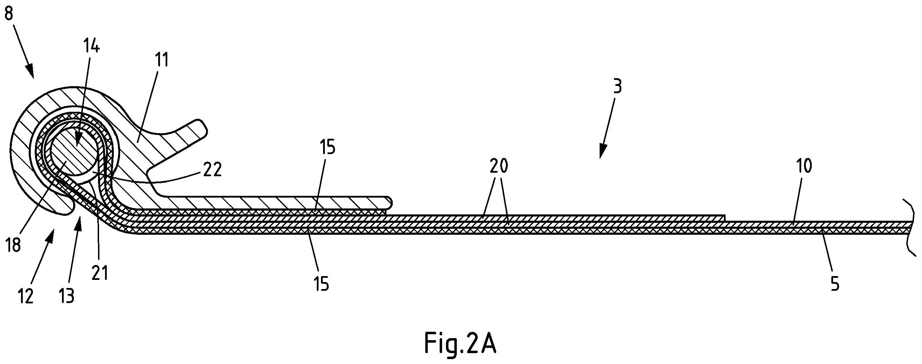

In den Fig. 2A-B ist die Verbindung der Planeinheit 3 mit der vorderen Eckrunge 8 in einer Schnittansicht dargestellt. Von der Eckrunge 8 ist dabei der Einfachheit halber lediglich das dort ortsfest vorgesehene Hakprofil 11 dargestellt. In die Aufnahme 12 des Hakprofils 11 mit kreisförmigem Querschnitt ist der Länge nach die Planeneinheit 3 so eingezogen, dass das Planelement 5 aus der seitlichen Öffnung 13 des Hakprofils 11 herausgeführt ist, um sich so bis zum genüberliegenden Längsende der Seitenwand 2 zu erstrecken. Damit das Planenelement 5 nicht versehentlich aus der seitlichen, länglichen Öffnung 13 des Hakprofils 11 herausgezogen wird, ist das Planenelement 5 um eine in der Aufnahme 12 des Hakprofils 11 vorgesehene Kedereinheit 14 umgeschlagen und sind im Bereich der einander überlappenden Abschnitte 15 des Planenelements 5 diese Abschnitte 15 miteinander verklebt und/oder verschweißt. Zusätzlich ist das Planenelement 5 im Umschlagbereich 16 noch über entsprechende Nähte 17 mit dem Gurt 10 vernäht, der ebenfalls um einen Gurtabschnitt 18 der Kedereinheit 14 umgeschlagen ist. Damit der Gurt 10 nicht aus dem Hakprofil 11 gezogen werden kann, ist der Gurt 10 zudem noch über entsprechende Nähte 19 an miteinander überlappenden Abschnitten 20 miteinander vernäht.

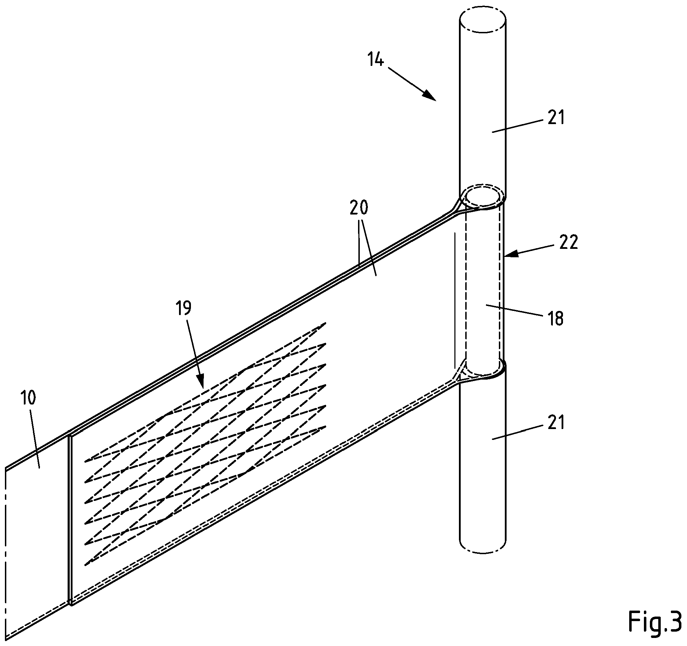

In der Fig. 3 ist die Planeneinheit 3 aus den Fig. 2A-B der besseren Anschaulichkeit halber ohne das Planenelement 5 dargestellt. Die Kedereinheit 14 weist einen kreisförmigen Querschnitt auf, wobei der Durchmesser der Kedereinheit 14 im Gurtabschnitt 18 geringer ausgebildet ist als in den angrenzenden Abschnitten 21 der Kedereinheit 14. Auf diese Weise wird eine Aufnahme 22 für den Gurt 10 geschaffen, der innerhalb des Umschlagbereichs 16 des Planenelements 5 um die Kedereinheit 14 umgeschlagen ist. Dies führt dazu, dass die Planeneinheit 3 im Gurtabschnitt 18 einen geringeren Durchmesser im Hakprofil 11 bildet als in den angrenzenden Abschnitten 21 der Planeneinheit 3.

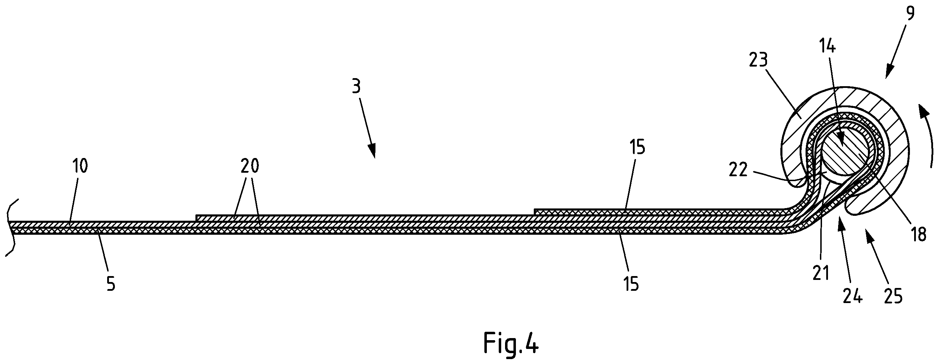

In der Fig. 4 ist das dem hinteren Ende des Planeneaufbaus 1 zugeordnete Längsende der Planeneinheit 3 in einer Schnittansicht dargestellt, das an der hinteren Eckrunge 9 festgelegt worden ist. Von der Eckrunge 9 ist der Einfachheit halber lediglich das Planenspannrohr 23 dargestellt, das in der Eckrunge 9 eingehängt worden ist. Zum Spannen des Planenelements 5 kann das Planenspannrohr 23 in der Pfeilrichtung gedreht werden, wobei sich das Planenelement 5 dann teilweise um das Planenspannrohr 23 herum wickelt und mithin aufwickelt. Auch in dem Planenspannrohr 23 ist eine Kedereinheit 14 der Länge nach aufgenommen, um den das Planenelement 5 umgeschlagen ist. Der Umschlagbereich 16 des Planenelments 5 ist über eine längliche seitliche Öffnung 24 aus dem Planenspannrohr 23 herausgeführt, von dem die einander gegenüberliegen Abschnitte 15 des Planenelements 5 miteinander verklebt und/oder verschweißt sind, so dass das Planenelement 5 sicher in dem Planenspannrohr 23 gehalten ist. Neben dem Planenelement 5 ist noch das gegenüberliegende Ende des Gurts 10 aus Fig. 3 um die Kedereinheit 14 umgeschlagen. Die beiden umgeschlagenen und einander überlappenden Abschnitte 20 des Gurts 10 sind zudem miteinander vernäht, so dass der Gurt 10 nicht versehentlich aus der Aufnahme 25 des Planenspannrohrs 23 gezogen werden kann. Der Gurt 10 ist zudem in einem Gurtabschnitt 18 um die Kedereinheit 14 umgelegt, in dem die Kedereinheit 14 einen geringeren Durchmesser aufweist als in den übrigen Abschnitten 21 der Kedereinheit 14. Die so entstehende Aussparung bzw. Aufnahme 22 der Kedereinheit 14 im Gurtabschnitt 18 wird durch den dort um die Kedereinheit 14 umgeschlagenen Gurt 10 nicht vollständig ausgefüllt, so dass das Planenelement 5 nicht oder nur bedingt an dem umgeschlagenen Gurt 10 reibt. Mit anderen Worten ist der äußere Durchmesser und der äußere Umfang des Gurts im Gurtabschnitt 18 geringer als der äußere Durchmesser und der äußere Umfang der Kedereinheit 14 außerhalb des Gurtabschnitts 18.

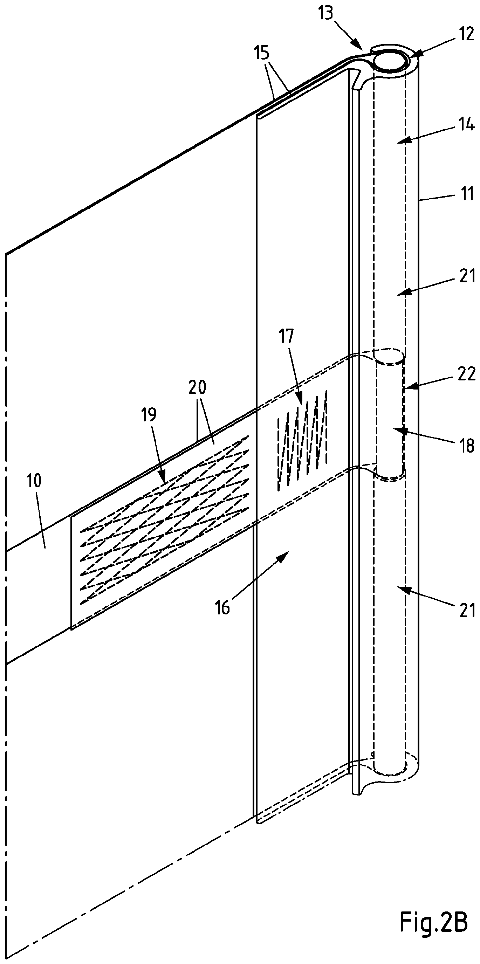

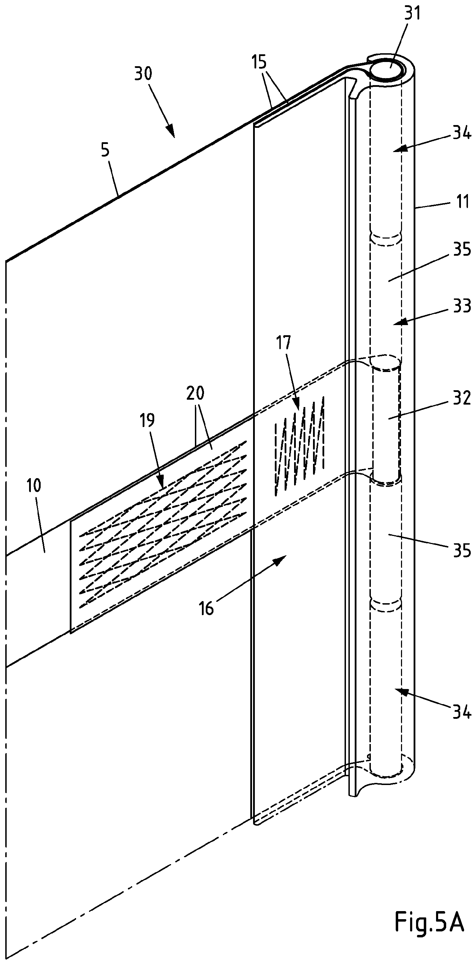

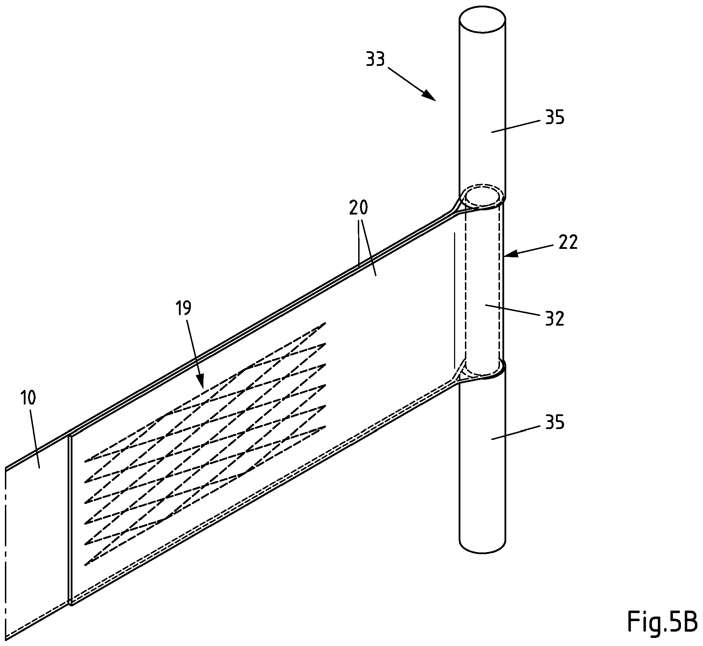

In den Fig. 5A-B ist eine alternative Planeneinheit 30 im Bereich eines Längsendes dargestellt, das in einem Hakprofil 11 aufgenommen ist. Bei dieser Planeneinheit 30 ist die Kedereinheit 31 mehrteilig ausgebildet. Es ist wenigstens ein den Gurtabschnitt 32 aufweisender Kederabschnitt 33 als auch wenigstens ein Kederabschnitt 34 ohne einen Gurtabschnitt vorgesehen, wobei diese Kederabschnitte 34 separat voneinander vorgesehen sind. Der wenigstens eine, keinen Gurtabschnitt aufweisende Kederabschnitt 34 ist wenigstens im Wesentlich wie die Kedereinheit 14 gemäß Fig. 2B außerhalb des Gurtabschnitts 18 ausgebildet. Der Kederabschnitt 33 mit dem Gurtabschnitt 32 ist im Gurtabschnitt 32 ebenfalls wenigstens im Wesentlichen wie die Kedereinheit 14 gemäß Fig. 2B ausgebildet. Zudem schließen sich bei dem Kederabschnitt 33 nach den Fig. 5A-B seitlich an den Gurtabschnitt 32 noch Verstärkungsabschnitte 35 an, die wie der Gurtabschnitt 32 einen kreisförmigen Querschnitt aufweisen, der größer ist und einen größeren Umfang aufweist als der Querschnitt im Gurtabschnitt 32. Die Querschnitte des keinen Gurt aufweisenden Kederabschnitts 34 und der Verstärkungsabschnitte 35 sind bei der dargestellten und insoweit bevorzugten Planeneinheit 30 wenigstens im Wesentlichen gleich groß.

## Patentansprüche

1. Planeneinheit (1,30), insbesondere Seitenplaneneinheit, für einen Planenaufbau (1) eines Nutzfahrzeugs (N), mit einem Planenelement (5), einer Kedereinheit (14,31) und wenigstens einem Gurt (10), wobei wenigstens ein Endbereich wenigstens eines Gurts (10) um wenigstens einen Gurtabschnitt (18,32) der Kedereinheit (14,31) umgeschlagen ist,
**dadurch gekennzeichnet, dass**
die Kedereinheit (14,31) in dem wenigstens einen Gurtabschnitt (18,32) einen geringeren Umfang aufweist als an wenigstens einem Abschnitt außerhalb des Gurtabschnitts (18,32).

2. Planeneinheit nach Anspruch 1,
**dadurch gekennzeichnet, dass**
das Planenelement (5) an wenigstens einem Rand um die Kedereinheit (14,31) umgeschlagen ist und dass, vorzugsweise, das Planenelement (5) um den wenigstens einen Gurtabschnitt (18,32) der Kedereinheit (14,31) und um den um den wenigstens einen Gurtabschnitt (18,32) umgeschlagenen Gurt (10) umgeschlagenen ist.

3. Planeneinheit nach Anspruch 1 oder 2,
**dadurch gekennzeichnet, dass**
das Planenelement (5) an wenigstens einem Rand an wenigstens einem Längsende der Planeneinheit (1,30) um die Kedereinheit (14,31) umgeschlagen oder mit der Kedereinheit verbunden ist und dass, vorzugsweise, das Planenelement (5) an den an der Längsenden der Planeneinheit (1,30) vorgesehenen Rändern um jeweils eine Kedereinheit (14,31) umgeschlagen oder mit der Kedereinheit verbunden ist.

4. Planeneinheit nach einem der Ansprüche 1 bis 3,
**dadurch gekennzeichnet, dass**
der wenigstens eine Gurt (10) wenigstens abschnittsweise fest mit dem Planenelement (5) verbunden, insbesondere verklebt, verschweißt und/oder vernäht, ist und/oder dass der wenigstens eine Gurt (10) zur Aussteifung des Planenelements (5) in wenigstens einer Richtung ausgebildet ist.

5. Planeneinheit nach einem der Ansprüche 1 bis 4,
**dadurch gekennzeichnet, dass**
die Kedereinheit (14,31), wenigstens im Gurtabschnitt (18,32), einen wenigstens im Wesentlichen kreisförmigen Querschnitt aufweist und dass der Durchmesser der Kedereinheit (14,31) im Gurtabschnitt (18,32) der Kedereinheit (14,31) geringer ist als der Durchmesser der Kedereinheit (14,31) in einem Abschnitt außerhalb des Gurtabschnitts (18,32).

6. Planeneinheit nach einem der Ansprüche 1 bis 5,
**dadurch gekennzeichnet, dass**
der Umfang und/oder der Durchmesser der Kedereinheit (14,31) im Gurtabschnitt (18,32) der Kedereinheit (14,31) weniger als 90%, vorzugsweise weniger als 80%, insbesondere weniger als 70%, als der Umfang und/oder der Durchmesser der Kedereinheit (14,31) in einem Abschnitt außerhalb des Gurtabschnitts (18,32) beträgt.

7. Planeneinheit nach einem der Ansprüche 1 bis 6,
**dadurch gekennzeichnet, dass**
der Umfang des wenigstens einen um einen Gurtabschnitt (18,32) der Kedereinheit (14,31) umgeschlagenen Gurts (10) kleiner oder gleich dem Umfang der Kedereinheit (14,31) in einem Abschnitt außerhalb des Gurtabschnitts (18,32) ist und/oder dass der Gesamtdurchmesser von der Kedereinheit (14,31) im Gurtabschnitt (18,32) und den um den Gurtabschnitt (18,32) umgeschlagenen Gurt kleiner oder gleich dem Durchmesser der Kedereinheit (14,31) in einem Abschnitt außerhalb des Gurtabschnitts (18,32) ist.

8. Planeneinheit nach einem der Ansprüche 1 bis 7,
**dadurch gekennzeichnet, dass**
die Kedereinheit (31) wenigstens zweiteilig mit wenigstens zwei separaten Kederabschnitten (33,34) ausgebildet ist, dass ein Kederabschnitt (33) den Gurtabschnitt (32) umfasst und zu wenigstens einer Seite des Gurtabschnitts (32) einen Verstärkungsabschnitt (35) aufweist und dass die Kedereinheit (31) an wenigstens einem Verstärkungsabschnitt (35) einen größeren Umfang und/oder Durchmesser aufweist als die Kedereinheit (31) am Gurtabsachnitt (32).

9. Planeneinheit nach Anspruch 8,
**dadurch gekennzeichnet, dass**
der Umfang und/oder der Durchmesser des wenigstens einen Kederabschnitts(33) im Gurtabschnitt (18,32) weniger als 90%, vorzugsweise weniger als 80%, insbesondere weniger als 70%, als der Umfang und/oder der Durchmesser des wenigstens einen Kederabschnitts (33) im Verstärkungsabschnitt (35) beträgt.

10. Planeneinheit nach einem der Ansprüche 1 bis 9,
**dadurch gekennzeichnet, dass**
das Planenelement (5) wenigstens im Wesentlichen aus einem kunststoffbeschichtetem Gewebe, insbesondere aus einem PVC-beschichteten Gewebe, gebildet ist und/oder dass der Gurt (10) wenigstens im Wesentlichen aus Kunststofffasern, insbesondere aus Polyesterfasern oder Aramidfasern, gebildet ist und/oder dass die Kedereinheit (14,31) und/oder wenigstens eine Kederabschnitt (33,34) wenigstens im Wesentlichen aus Kunststoff, insbesondere aus Polyvinylchlorid (PVC) gebildet ist und/oder dass der wenigstens eine einen Gurtabschnitt (18,32) umfassende Kederabschnitt (14,31) wenigstens im Wesentlichen aus Metall, insbesondere aus einem mit einer korrosionsbeständigen Beschichtung versehenen Metall oder Edelstahl, gebildet ist.

11. Planeneinheit nach einem der Ansprüche 1 bis 10,
**dadurch gekennzeichnet, dass**
an einem Rand des Planenelements (5) einer Mehrzahl von Planenlaufrollern zum Verbinden mit einem Längsholm (4) eines Planenaufbaus (1) vorgesehen sind.

12. Planenaufbau (1) eines Nutzfahrzeugs (N), insbesondere eines Lastkraftwagens, Anhängers oder Sattelaufliegers, mit wenigstens einer Planeneinheit (1,30),
**dadurch gekennzeichnet, dass**
die wenigstens eine Planeneinheit (1,30) nach einem der Ansprüche 1 bis 11 ausgebildet ist.

13. Planenaufbau nach Anspruch 12,
**dadurch gekennzeichnet, dass**
der Planenaufbau (1) als Curtainsider ausgebildet und die Planeneinheit (1,30) in Längsrichtung des Nutzfahrzeugs (N) verschiebbar vorgesehen ist.

14. Planenaufbau nach Anspruch 12 oder 13,
**dadurch gekennzeichnet, dass**
ein Rand des Planenelements (5) mit einer Mehrzahl von Planenlaufrollern mit einem Längsholm (4) eines Planenaufbaus (1) verbunden ist.

15. Planenaufbau nach einem der Ansprüche 12 bis 14,
**dadurch gekennzeichnet, dass** Planeneinheit (1,30) mit der Kedereinheit (14,31) an wenigstens einem Längsende der Planeneinheit (1,30) formschlüssig in einer Hakprofil (11) und/oder einem Planenspannrohr (23) aufgenommen ist.

## Claims

1. Tarpaulin unit (1, 30), in particular side tarpaulin unit, for a tarpaulin body (1) of a commercial vehicle (N), having a tarpaulin element (5), a piping unit (14, 31) and at least one strap (10), wherein at least one end region of at least one strap (10) is folded around at least one strap section (18, 32) of the piping unit (14, 31),
**characterised in that**
the piping unit (14, 31) in the at least one strap section (18, 32) has a smaller circumference than on at least one section outside the strap section (18, 32).

2. Tarpaulin unit according to claim 1,
**characterised in that**
the tarpaulin element (5) is wrapped around the piping unit (14, 31) on at least one edge and that, preferably, the tarpaulin element (5) is wrapped around the at least one strap section (18, 32) of the piping unit (14, 31) and around the strap (10) wrapped around the at least one strap section (18, 32).

3. Tarpaulin unit according to claim 1 or 2,
**characterised in that**
the tarpaulin element (5) is folded around the piping unit (14, 31) or connected to the piping unit at at least one edge at at least one longitudinal end of the tarpaulin unit (1, 30) and **in that**, preferably, the tarpaulin element (5) is folded around a piping unit (14, 31) or connected to the piping unit at the edges provided at the longitudinal ends of the tarpaulin unit (1, 30).

4. Tarpaulin unit according to any one of claims 1 to 3,
**characterised in that**
the at least one strap (10) is firmly connected, in particular glued, welded and/or sewn, at least in sections to the tarpaulin element (5) and/or that the at least one strap (10) is designed to stiffen the tarpaulin element (5) in at least one direction.

5. Tarpaulin unit according to any one of claims 1 to 4,
**characterised in that**
the piping unit (14, 31), at least in the strap section (18, 32), has an at least substantially circular cross-section and **in that** the diameter of the piping unit (14, 31) in the strap section (18, 32) of the piping unit (14, 31) is smaller than the diameter of the piping unit (14, 31) in a section outside of the strap section (18, 32).

6. Tarpaulin unit according to any one of claims 1 to 5,
**characterised in that**
the circumference and/or the diameter of the piping unit (14, 31) in the strap section (18, 32) of the piping unit (14, 31) is less than 90%, preferably less than 80%, in particular less than 70%, than the circumference and/or the diameter of the piping unit (14, 31) in a section outside of the strap section (18, 32).

7. Tarpaulin unit according to any one of claims 1 to 6,
**characterised in that**
the circumference of the at least one strap (10) wrapped around a strap section (18, 32) of the piping unit (14, 31) is smaller than or equal to the circumference of the piping unit (14, 31) in a section outside the strap section (18, 32) and/or **in that** the total diameter of the piping unit (14, 31) in the strap section (18, 32) and the strap wrapped around the strap section (18, 32) is smaller than or equal to the diameter of the piping unit (14, 31) in a section outside of the strap section (18, 32).

8. Tarpaulin unit according to any one of claims 1 to 7,
**characterised in that**
the piping unit (31) is formed at least in two parts with at least two separate piping sections (33, 34), **in that** one piping section (33) surrounds the strap section (32) and has a reinforcing section (35) on at least one side of the strap section (32), and **in that** the piping unit (31) on at least one reinforcing section (35) has a larger circumference and/or diameter than the piping unit (31) on the strap section (32).

9. Tarpaulin unit according to claim 8,
**characterised in that**
the circumference and/or the diameter of the at least one piping section (33) in the strap section (18, 32) is less than 90%, preferably less than 80%, in particular less than 70%, than the circumference and/or the diameter of the at least one piping section (33) in the reinforcing section (35).

10. Tarpaulin unit according to any one of claims 1 to 9,
**characterised in that**
the tarpaulin element (5) is formed at least substantially from a plastic-coated fabric, in particular a PVC-coated fabric, and/or that the strap (10) is formed at least substantially from plastic fibres, in particular from polyester fibres or aramid fibres and/or **in that** the piping unit (14, 31) and/or at least one piping section (33, 34) is formed at least substantially from plastic, in particular from polyvinyl chloride (PVC) and/or **in that** the at least one piping section (14, 31) comprising a strap section (18, 32) is formed at least substantially from metal, in particular from a metal or stainless steel provided with a corrosion-resistant coating.

11. Tarpaulin unit according to any one of claims 1 to 10,
**characterised in that**
a plurality of tarpaulin rollers for connection to a longitudinal bar (4) of a tarpaulin body (1) are provided on an edge of the tarpaulin element (5).

12. Tarpaulin body (1) of a commercial vehicle (N), in particular a lorry, trailer or semi-trailer, with at least one tarpaulin unit (1, 30),
**characterised in that**
the at least one tarpaulin unit (1, 30) is designed according to any one of claims 1 to 11.

13. Tarpaulin body according to claim 12,
**characterised in that**
the tarpaulin body (1) is designed as a curtainsider and the tarpaulin unit (1, 30) is displaceably provided in the longitudinal direction of the commercial vehicle (N).

14. Tarpaulin body according to claim 12 or 13,
**characterised in that**
an edge of the tarpaulin element (5) with a plurality of tarpaulin rollers is connected to a longitudinal bar (4) of a tarpaulin body (1).

15. Tarpaulin construction according to any one of claims 12 to 14,
**characterised in that**
tarpaulin unit (1, 30) is positively seated in a hook profile (11) and/or a tarpaulin tensioning tube (23) with the piping unit (14, 31) at at least one longitudinal end of the tarpaulin unit (1, 30).

## Revendications

1. Unité de bâche (1, 30), notamment une unité de bâche latérale, pour une structure de bâche (1) d'un véhicule utilitaire (N), avec un élément de bâche (5), une unité bourrelet (14, 31) et au moins une sangle (10), au moins une zone d'extrémité d'au moins une sangle (10) étant repliée autour d'au moins une section de sangle (18, 32) de l'unité bourrelet (14, 31),
**caractérisée en ce que** l'unité bourrelet (14, 31) présente, dans au moins une section de sangle (18, 32), une moindre dimension que sur au moins une section à l'extérieur de la section de sangle (18, 32).

2. Unité de bâche selon la revendication 1,
**caractérisée en ce que** l'élément de bâche (5) est replié, sur au moins un bord, autour de l'unité bourrelet (14, 31) et **en ce que**, de préférence, l'élément de bâche (5) est replié autour d'au moins une section de sangle (18, 32) de l'unité bourrelet (14, 31) et autour de la sangle (10) rabattue autour d'au moins une section de sangle (18, 32).

3. Unité de bâche selon la revendication 1 ou 2,
**caractérisée en ce que** l'élément de bâche (5) est replié, sur au moins un bord, sur au moins une extrémité longitudinale de l'unité de bâche (1, 30), autour de l'unité bourrelet (14, 31) ou est relié à l'unité bourrelet et **en ce que**, de préférence, l'élément de bâche (5) est replié, sur des bords prévus sur les extrémités longitudinales de l'unité de bâche (1, 30), autour respectivement d'une unité bourrelet (14, 31) ou est relié à l'unité bourrelet.

4. Unité de bâche selon l'une des revendications 1 à 3,
**caractérisée en ce qu'**au moins une sangle (10) est reliée fermement, au moins partiellement, à l'élément de bâche (5), notamment elle est collée, soudée et/ou cousue et/ou **en ce qu'**au moins une sangle (10) est conçue pour renforcer l'élément de bâche (5) dans au moins une direction.

5. Unité de bâche selon l'une des revendications 1 à 4,
**caractérisée en ce que** l'unité bourrelet (14, 31) présente, au moins dans la section de sangle (18, 32), une section transversale au moins sensiblement circulaire et **en ce que** le diamètre de l'unité bourrelet (14, 31) dans la section de sangle (18, 32) de l'unité bourrelet (14, 31) est inférieur par rapport au diamètre de l'unité bourrelet (14,31) dans une section à l'extérieur de la section de sangle (18, 32).

6. Unité de bâche selon l'une des revendications 1 à 5,
**caractérisée en ce que** la dimension et/ou le diamètre de l'unité bourrelet (14, 31) dans la section de sangle (18, 32) de l'unité bourrelet (14, 31) est inférieur(e) à 90 %, de préférence inférieur(e) à 80 %, notamment inférieur(e) à 70 % par rapport à la dimension et/ou au diamètre de l'unité bourrelet (14, 31) dans une section à l'extérieur de la section de sangle (18, 32).

7. Unité de bâche selon l'une des revendications 1 à 6,
**caractérisée en ce que** la dimension d'au moins une sangle (10) rabattue autour d'une section de sangle (18, 32) de l'unité bourrelet (14, 31) est inférieure ou identique à la dimension de l'unité bourrelet (14, 31) dans une section à l'extérieur de la section de sangle (18, 32) et/ou **en ce que** le diamètre total de l'unité bourrelet (14, 31) dans la section de sangle (18, 32) et de la sangle rabattue autour de la section de sangle (18, 32) est inférieur ou identique au diamètre de l'unité bourrelet (14, 31) dans une section à l'extérieur de la section de sangle (18, 32).

8. Unité de bâche selon l'une des revendications 1 à 7,
**caractérisée en ce que** l'unité bourrelet (31) est constituée au moins de deux parties avec au moins deux sections de bourrelet (33, 34) séparées, **en ce qu'**une section de bourrelet (33) comporte la section de sangle (32) et présente, sur au moins un côté de la section de sangle (32), une section de renfort (35) et **en ce que** l'unité bourrelet (31) présente, sur au moins une section de renfort (35), une plus grande dimension et/ou diamètre que l'unité bourrelet (31) sur la section de sangle (32).

9. Unité de bâche selon la revendication 8,
**caractérisée en ce que** la dimension et/ou le diamètre d'au moins une section de bourrelet (33) dans la section de sangle (18,32) est inférieur(e) à 90 %, de préférence inférieur(e) à 80 %, notamment inférieur(e) à 70 % par rapport à la dimension et/ou au diamètre d'au moins une section de bourrelet (33) dans la section de renfort (35).

10. Unité de bâche selon l'une des revendications 1 à 9,
**caractérisée en ce que** l'élément de bâche (5) est formé, au moins sensiblement, en un tissu recouvert de matière synthétique, notamment en un tissu enduit de PVC et/ou **en ce que** la sangle (10) est formée, au moins sensiblement, en fibres de polyester, notamment en fibres de polyester ou en fibres d'aramide et/ou **en ce que** l'unité bourrelet (14, 31) et/ou au moins une section de bourrelet (33, 34) est formée, au moins sensiblement, en matière synthétique, notamment en chlorure de polyvinyle (PVC) et/ou **en ce qu'**au moins une section de bourrelet (14, 31) comportant une section de sangle (18, 32) est formée, au moins sensiblement, en métal, notamment en un métal ou en acier inoxydable pourvu d'un revêtement résistant à la corrosion.

11. Unité de bâche selon l'une des revendications 1 à 10,
**caractérisée en ce que** l'on prévoit sur un bord de l'élément de bâche (5) plusieurs roulements de bâche destinés à être reliés à un longeron (4) d'une structure de bâche (1).

12. Structure de bâche (1) d'un véhicule utilitaire (N), notamment d'un poids lourd, d'une remorque ou d'une semi-remorque, avec au moins une unité de bâche (1, 30), **caractérisée en ce qu'**au moins une unité de bâche (1, 30) est conçue selon l'une des revendications 1 à 11.

13. Structure de bâche selon la revendication 12,
**caractérisée en ce que** la structure de bâche (1) est conçue en tant que rideau latéral et l'unité de bâche (1, 30) est prévue coulissante en direction longitudinale du véhicule utilitaire (N).

14. Structure de bâche selon la revendication 12 ou 13,
**caractérisée en ce qu'**un bord de l'élément de bâche (5) est relié avec plusieurs roulements de bâche à un longeron (4) d'une structure de bâche (1).

15. Structure de bâche selon l'une des revendications 12 à 14,
**caractérisée en ce que** l'unité de bâche (1, 30) avec l'unité bourrelet (14, 31) est logée par liaison de forme, sur au moins une extrémité longitudinale de l'unité de bâche (1, 30), dans un profilé de type rail (11) et/ou un tube de tension de bâche (23).
